# EUROPÄISCHE PATENTSCHRIFT

(11) **EP 3 161 092 B1**
(45) Veröffentlichungstag und Bekanntmachung des Hinweises auf die Patenterteilung: **28.11.2018**
(21) Anmeldenummer: 15731939.3
(22) Anmeldetag: 26.06.2015
(51) Int. Cl.: C09J 183/04

(54) **TITANKOMPLEXE ALS VULKANISATIONSKATALYSATOREN**
TITANIUM COMPLEXES AS VULCANIZATION CATALYSTS
COMPLEXES DE TITANE EN TANT QUE CATALYSEURS DE VULCANISATION

(30) Priorität: 26.06.2014 DE 102014212291
(43) Veröffentlichungstag der Anmeldung: 03.05.2017
(73) Patentinhaber: Henkel AG & Co. KGaA, 40589 Düsseldorf (DE)
(72) Erfinder: HELPENSTEIN, Klaus, 41199 Mönchengladbach (DE); KLEIN, Johann, 40593 Düsseldorf (DE); GUTACKER, Andrea, 40597 Düsseldorf (DE); MEJIA, Esteban, 18059 Rostock (CO); HILLBRANDT, Steve, 18059 Rostock (DE); KRAGL, Udo, 18298 Kritzmow (DE)
(86) Internationale Anmeldenummer: PCT/EP2015/064546
(87) Internationale Veröffentlichungsnummer: WO 2015/197829

(56) Entgegenhaltungen:
- DATABASE WPI Week 200563 Thomson Scientific, London, GB; AN 2005-608667 XP002743732, -& JP 2005 213487 A (TOSHIBA SILICONE KK) 11. August 2005 (2005-08-11)
- DATABASE WPI Week 201425 Thomson Scientific, London, GB; AN 2014-F49632 XP002743733, -& WO 2014/046055 A1 (NISSAN CHEM IND LTD) 27. März 2014 (2014-03-27)
- CHANDRA AND M F LAPPERT G: "Amido-derivatives of metals and metalloids. Part VI. Reactions of titanium(IV), zirconium(IV), and hafnium(IV) amides with protic compounds", JOURNAL OF THE CHEMICAL SOCIETY, CHEMICAL SOCIETY, LETCHWORTH; GB, 1. Januar 1968 (1968-01-01), Seiten 1940-1945, XP002004323, ISSN: 0368-1769, DOI: 10.1039/J19680001940 in der Anmeldung erwähnt
- M D Rausch ET AL: "THE PREPARATION AND PROPERTIES OF SOME o-ALKYL AND o-ARYL DERIVATIVES OF TITANIUM", Journal of Organometallic Chemistry, 1. Januar 1974 (1974-01-01), XP055209827, Gefunden im Internet: URL:http://www.sciencedirect.com/science/a rticle/pii/S0022328X0083764X/pdf?md5=4c0c0 e010f9769867390a2ed57c6dac0&pid=1-s2.0-S00 22328X0083764X-main.pdf [gefunden am 2015-08-27] in der Anmeldung erwähnt

## Beschreibung

Die Erfindung betrifft Titanverbindungen, die als Katalysatoren für die Vulkanisation von Silizium-haltigen Polymeren und Polymermischungen nützlich sind, und die bekannten, toxischen Zinnverbindungen ersetzen können. Die beschriebenen Titanverbindungen zeichnen sich durch gute katalytische Aktivität und Stabilität, auch in Anwesenheit von Silan-basierten Haftvermittlern, aus. Weiterhin werden geeignete Verwendungen für derartige Verbindungen und Zusammensetzungen und Zubereitungen, die diese Katalysatoren enthalten, beschrieben.
Silikonpolymere, insbesondere Polymethylsiloxane wie Polydimethylsiloxan (PDMS), haben große Bedeutung in Kleb-, Dicht- und Isolierstoffen. Unter diesen machen solche, die bei niedrigen Temperaturen und unter Umgebungsbedingungen vulkanisieren, einen nicht unerheblichen Marktanteil aus. Typische Formulierungen enthalten ein reaktives PDMS Polymer, einen Vernetzer und einen Kondensationskatalysator. Obwohl zinnorganische Verbindungen viele Jahre erfolgreich als Katalysatoren eingesetzt wurden und exzellente Ergebnisse im Hinblick auf Lagerungsstabilität, Aushärtungszeit und Selektivität liefern, sind diese in letzter Zeit aufgrund von toxikologischen Bedenken und aus Gründen des Umweltschutzes in die Kritik geraten.
Obwohl als Ersatz für die bekannten Zinnverbindungen verschiedenste Metall-basierte Katalysatoren vorgeschlagen wurden, haben die bekannten Alternativen oftmals Nachteile im Hinblick auf die Stabilität, katalytische Aktivität oder Kompatibilität. So haben die als Ersatz bekannten Titanverbindungen beispielsweise den Nachteil, mit den oftmals als Haftvermittlern eingesetzten Aminosilanen nicht kompatibel zu sein.

Aus US 4,530,882 A, US 5,948,854 A, JP 2005 213487 A und US 5,286,766 A sind härtbare Silikonzusammensetzungen bekannt, die Siloxanpolymere mit hydrolysierbaren Endgruppen, Titan-basierte Hydrolysekatalysatoren und gegebenenfalls Aminosilane enthalten. Bei den Titan-basierten Hydrolysekatalysatoren handelt es sich um Titanester, vorzugsweise Tetraalkyltitanate, besonders bevorzugt um Tetraisopropyltitanat. Auch diese Katalysatoren sind bezüglich ihrer katalytischen Aktivität noch nicht völlig zufriedenstellend. Zudem ist die Lagerstabilität entsprechender härtbarer Zusammensetzungen nicht optimal und die daraus erhältlichen ausgehärteten Produkte weisen vergleichsweise niedrige Härten auf.
Es ist daher eine Aufgabe der vorliegenden Erfindung Alternativen zu den als Kondensationskatalysatoren bekannten Titanverbindungen bereitzustellen, die die bekannten Nachteile überwinden.

Die vorliegende Erfindung löst die Aufgabe verbesserte Kondensationskatalysatoren auf Titanbasis für die Verwendung zur Härtung von Polymeren, die reaktive Siliziumgruppen enthalten, bereitzustellen, die die oben beschriebenen Anforderungen erfüllt, d.h. eine ausreichende katalytische Aktivität und Stabilität aufweisen und mit den üblicherweise als Haftvermittler verwendeten Aminosilanen kompatibel sind.
In einem ersten Aspekt betrifft die Erfindung daher eine härtbare Zusammensetzung, umfassend
a) mindestens ein Polymer mit mindestens einer Silizium-haltigen Gruppe der Formel (1)

   -Si(R¹)ₖ(Y)₃₋ₖ (1),

   wobei
   R¹ für einen Kohlenwasserstoffrest mit 1 bis 20 C-Atomen steht oder eine Triorganosiloxan-Gruppe der Formel -O-Si(R²)₃, wobei jedes R² unabhängig für einen Kohlenwasserstoffrest mit 1 bis 20 C-Atomen steht;
   jedes Y unabhängig für eine Hydroxy- oder eine hydrolysierbare Gruppe stehen, insbesondere eine Oxim- oder/und Alkoxygruppe; und
   k 0, 1 oder 2 ist;
b) mindestens eine Titanverbindung der Formel (2)

   Ti(L)ₙ(NX2)ₘ (2)

   oder der Formel (3)

   Ti(R³)(L)₃ (3),

   wobei
   jedes X unabhängig für ein Wasserstoffatom, einen Kohlenwasserstoffrest mit 1 bis 20 C-Atomen, der optional ein oder mehrere Heteroatome, insbesondere Stickstoffatome enthalten kann, oder eine Silizium-haltige organische Gruppe steht oder zwei X gemeinsam mit dem Stickstoffatom, an welches sie gebunden sind, einen heterozyklischen Ring bilden;
   jedes L unabhängig für eine hydrolysierbare Sauerstoff- oder Stickstoff-haltige organische Gruppe steht, insbesondere eine Alkoxygruppe;
   R³ für einen Kohlenwasserstoffrest mit 1 bis 20 C-Atomen, steht; und
   m 1, 2, 3 oder 4 und n 0, 1, 2 oder 3 sind, wobei m + n = 4; und
c) optional mindestens eine Verbindung, die eine hydrolysierbare Silizium-haltige Gruppe und ein Molekulargewicht im Bereich von 100 bis 1000 g/mol aufweist, insbesondere ein Aminosilan.
In einem weiteren Aspekt betrifft die Erfindung eine Zubereitung, enthaltend eine härtbare Zusammensetzung wie oben beschrieben.

Die Erfindung richtet sich ferner auch auf die Verwendung einer Zusammensetzung oder einer Zubereitung wie oben definiert als Kleb- oder Dichtstoff.

Noch ein weiterer Aspekt betrifft Titanverbindungen der Formel (6),

Ti(OR⁴)₃(NXX') (6)

wobei
jedes R⁴ unabhängig für C₁₋₈ Alkyl steht, insbesondere für Ethyl, i-Propyl oder n-Butyl;
X für Wasserstoff, C₁₋₂₀ Alkyl oder Aryl steht, wobei der Alkylrest optional ein oder mehrere Stickstoffatome enthalten kann, oder eine Silizium-haltige organische Gruppe der Formel -(CH₂)ₚ-Si(Alk)_{q}(OAlk)ᵣ, wobei p eine ganze Zahl von 0-9 ist, q 0, 1 oder 2 ist, r 1, 2 oder 3 ist, wobei q + r = 3, und Alk eine C₁₋₄ Alkylgruppe ist, insbesondere Methyl oder Ethyl; und
X' für eine Silizium-haltige organische Gruppe der Formel -(CH₂)ₚ-Si(Alk)_{q}(OAlk)ᵣ steht, wobei p eine ganze Zahl von 1-9, insbesondere 3, ist, q 0, 1 oder 2, insbesondere 0, ist, r 1, 2 oder 3, insbesondere 3, ist, wobei q + r = 3, und Alk eine C₁₋₄ Alkylgruppe ist, insbesondere Methyl oder Ethyl.

Schließlich richtet sich die Erfindung auch auf die Verwendung der vorstehend beschriebenen Titanverbindungen als Katalysator, insbesondere zur Aushärtung eines Silizium-haltigen Polymers durch die Bildung von Siloxanbindungen.

Sofern in der vorliegenden Anmeldung auf Molekulargewichte Bezug genommen wird, beziehen sich die Angaben, sofern nicht anders angegeben, auf das Gewichtsmittel, d.h. den M_{w}-Wert, und nicht das arithmetische Mittel. Das Molekulargewicht wird mittels Gelpermeationschromatographie (GPC) mit Tetrahydrofuran (THF) als Eluent nach DIN 55672-1:2007-08 bestimmt, vorzugsweise bei 35 °C.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polymer" bedeutet somit beispielsweise mindestens eine Art von Polymer, d.h. dass eine Art von Polymer oder eine Mischung mehrerer verschiedener Polymere verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

Für das Polymergerüst des mindestens einen Polymers a) gibt es keine besonderen Einschränkungen und es können alle bekannten Polymere mit verschiedenen Arten von Hauptkettengerüst verwendet werden. In verschiedenen Ausführungsformen ist das Polymer a) daher ausgewählt aus Alkydharzen, (Meth)Acrylaten und (Meth)Acrylamiden sowie deren Salzen, Phenolharzen, Polyalkylenen, Polyamiden, Polycarbonaten, Polyolen, Polyethern, Polyestern, Polyurethanen, Vinylpolymeren, Siloxanen sowie Copolymeren bestehend aus mindestens zwei der vorgenannten Polymerklassen.

Besonders bevorzugt werden Polyole/Polyether, insbesondere Polyethylenoxid und/oder Polypropylenoxid oder Siloxane eingesetzt.

Nach einer weiteren bevorzugten Ausführungsform der erfindungsgemäßen Zusammensetzung beträgt das Molekulargewicht Mₙ des Polymergerüsts zwischen 500 und 100000 g/mol. Weitere besonders bevorzugte Molekulargewichtsbereiche sind 5000 bis 25000 g/mol, ganz besonders bevorzugt sind 8000 bis 20000 g/mol. Diese Molekulargewichte sind besonders vorteilhaft, da Zusammensetzungen mit diesen Molekulargewichten Viskositäten aufweisen, die eine leichte Verarbeitbarkeit ermöglichen. Die Polymere können jeweils geradkettig oder verzweigt sein.

Die Silizium-haltige Gruppe in dem Polymer ist eine reaktive Gruppe, in der eine Hydroxygruppe oder eine hydrolysierbare Gruppe an das Siliziumatom gebunden ist, und die dazu in der Lage ist, durch Bildung einer Siloxanbindung zu vernetzen. Diese Vernetzungsreaktion kann durch einen Silanol-Kondensationskatalysator, wie die hierin beschriebenen Titanverbindungen, beschleunigt werden.

Die reaktive Gruppe hat die Formel -Si(R¹)ₖ(Y)₃₋ₖ, wobei R¹ für einen Kohlenwasserstoffrest mit 1 bis 20 C-Atomen steht oder eine Triorganosiloxan-Gruppe der Formel -O-Si(R²)₃, wobei jedes R² unabhängig für einen Kohlenwasserstoffrest mit 1 bis 20 C-Atomen steht, jedes Y unabhängig für eine Hydroxy- oder eine hydrolysierbare Gruppe steht, und k ist 0, 1 oder 2 ist. In verschiedenen Ausführungsformen steht R¹ für eine Alkylgruppe mit 1 bis 20 C-Atomen, eine Arylgruppe mit 6 bis 20 C-Atomen, eine Aralkylgruppe mit 7 bis 20 C-Atomen oder eine Triorganosiloxan-Gruppe der Formel -O-Si(R²)₃, wie oben definiert. Falls mehrere Y Reste enthalten sind können diese gleich oder verschieden sein.

Beispiele für hydrolysierbare Gruppen schließen ein, sind aber nicht beschränkt auf ein Wasserstoffatom, ein Halogenatom, eine Alkoxygruppe, eine Acyloxygruppe, eine Oximgruppe, eine Aminogruppe, eine Amidgruppe, eine Säureamidgruppe, eine Aminoxygruppe, eine Mercaptogruppe, eine Alkenyloxygruppe und dergleichen. Besonders bevorzugt sind Alkoxygruppen, insbesondere Methoxy- und Ethoxygruppen, und Oximgruppen. "Oximgruppen", wie hierin verwendet, schließt Ketoxime und Aldoxime ein und bezeichnet allgemein Gruppen, die die funktionelle Gruppe R'₂C=N-O- enthalten, wobei das Sauerstoffatom an das Siliziumatom gebunden ist und R' H oder jede andere Gruppe, vorzugsweise Alkylgruppe, sein kann.

Beispiele für R¹ in der oben beschriebenen allgemeinen Formel (1) schließen Alkylgruppen, wie eine Methylgruppe und eine Ethylgruppe, Cycloalkylgruppen, wie eine Cyclohexylgruppe, Arylgruppen, wie eine Phenylgruppe, Aralkylgruppen, wie eine Benzylgruppe, und eine Trimethylsiloxygruppe ein.

Spezifische Beispiele für reaktive Silizium-haltige Gruppen umfassen Dimethoxymethylsilyl-, Diethoxymethylsilyl- und Diisopropoxymethylsilylgruppen.

In verschiedenen Ausführungsformen enthält jeweils ein Polymermolekül zwei oder mehr der oben beschriebenen reaktiven Gruppen.

Verfahren zum Einführen reaktiver Silizium-haltiger Gruppen, vorzugsweise Endgruppen, in Polymere sind im Stand der Technik gut bekannt.

Die reaktive Silizium-haltige Gruppe kann an einem oder beiden Ende(n) der Hauptkette, innerhalb der Hauptkette, oder innerhalb oder am Ende von einer oder mehreren Seitenkette(n) angeordnet sein.

Als Polymerkomponente a) können die oben beschriebenen organischen Polymere entweder jeweils allein oder in Kombinationen von zwei oder mehreren davon verwendet werden. Werden Kombinationen von zwei oder mehr Polymeren eingesetzt, können sich die eingesetzten Polymere in ihrer Monomerzusammensetzung und/oder ihrem Molekulargewicht unterscheiden.

Die hierin beschriebenen härtbaren Zusammensetzungen enthalten mindestens eine Titanverbindung der Formel (2)

Ti(L)ₙ(NX2)ₘ (2)

oder der Formel (3)

Ti(R³)(L)₃ (3).

Dabei steht jedes X unabhängig für ein Wasserstoffatom, einen Kohlenwasserstoffrest mit 1 bis 20 C-Atomen, der optional ein oder mehrere Heteroatome, insbesondere Stickstoffatome enthalten kann, oder eine Silizium-haltige organische Gruppe. Vorzugsweise steht X für Wasserstoff, C₁₋₂₀ Alkyl oder C₆₋₂₀Aryl, wobei der Alkylrest optional ein oder mehrere Stickstoffatome enthalten kann, oder eine Silizium-haltige organische Gruppe der Formel -(CH₂)ₚ-Si(Alk)_{q}(OAlk)ᵣ, wobei p eine ganze Zahl von 0-9 ist, q und r jeweils 0, 1, 2 oder 3 sind, wobei q + r = 3, und Alk eine C₁₋₄ Alkylgruppe ist, insbesondere Methyl oder Ethyl. Alternativ können zwei X gemeinsam mit dem Stickstoffatom, an welches sie gebunden sind, einen heterozyklischen Ring bilden. In derartigen Ausführungsformen kann der heterozyklische Ring ein gesättigter, ein- oder mehrfach ungesättigter oder aromatischer, 5- bis 8-gliedriger Ring, der 1 bis 3 Heteroatome, insbesondere Stickstoff, Sauerstoff oder Schwefel, vorzugsweise Stickstoff, enthält, sein.
In den Formeln (2) und (3) steht jedes L unabhängig für eine hydrolysierbare Sauerstoff- oder Stickstoff-haltige organische Gruppe steht, insbesondere eine Alkoxygruppe.

R³ steht für einen Kohlenwasserstoffrest mit 1 bis 20 C-Atomen,
In der Formel (2) ist m 1, 2, 3 oder 4 und n 0, 1, 2 oder 3, mit der Maßgabe, dass m + n = 4. Es ist bevorzugt, dass m 1 oder 2, insbesondere 1 ist.
In verschiedenen Ausführungsformen der Erfindung ist die mindestens eine Titanverbindung eine Titanverbindung der Formel (4):

Ti(OR⁴)₃(NX₂) (4).

Dabei steht jedes R⁴ unabhängig für C₁₋₈ Alkyl, insbesondere für Ethyl, i-Propyl oder n-Butyl, und jedes X unabhängig für Wasserstoff, C₁₋₂₀ Alkyl oder C₆₋₂₀Aryl, wobei der Alkylrest optional ein oder mehrere Stickstoffatome enthalten kann, oder eine Silizium-haltige organische Gruppe der Formel - (CH₂)ₚ-Si(Alk)_{q}(OAlk)ᵣ, wobei p eine ganze Zahl von 0-9 ist, q und r jeweils 0, 1, 2 oder 3 sind, wobei q + r = 3, und Alk eine C₁₋₄ Alkylgruppe ist, insbesondere Methyl oder Ethyl.
Beispiele für die Gruppe (NX₂) schließen ein, ohne darauf beschränkt zu sein, Dialkylamido, wobei die Alkylreste vorzugsweise C₁₋₄ Alkylreste sind, insbesondere Diethylamido.
In bevorzugten Ausführungsformen der hierin beschriebenen Titanverbindungen der Formeln (2) und (4) ist der Ligand der Formel (NX₂), ein Ligand der durch Kopplung eines Aminosilans an das Titan erhältlich ist. Beispiele für solche Liganden schließen ein, ohne darauf beschränkt zu sein, bis(Trialkylsilyl)amido, wie beispielsweise bis(Trimethylsilyl)amido, Trialkoxysilanamido und bis(Trialkoxysilan)amido, insbesondere Trialkoxysilanalkylamido und bis(Trialkoxysilanalkyl)amido, wie beispielsweise 3-(Triethoxysilyl)propyl-1-amido (4a), 3-(Trimethoxysilyl)propyl-1-amido (4b), bis[(3-Triethoxysilyl)propyl]amido (4c), bis[(3-Trimethoxysilyl)propyl]amido (4d), 3-[diethoxy(methyl)silyl]propyl-1-amido (4e), 2-((3-(trimethoxysilyl)propyl)amino)ethyl-1-amido (4f), 2-((3-(triethoxysilyl)propyl)amino)ethyl-1-amido (4g), 9-(Trimethoxysilyl)-3,6-diazanonane-1-amido (4h), phenyl((trimethoxysilyl)methyl)amido (4i), phenyl(3-(trimethoxysilyl)propyl)amido (4j) und 2-((3-(dimethoxy(methyl)silyl)propyl)amino)ethyl-1-amido (4k) und 4-(3-(dimethoxy(methyl)silyl)propyl)piperazin-1-ido (4l).

NH(CH₂)₃Si(OMe)₃ (4a)

NH(CH₂)₃Si(OEt)₃ (4b)

N[(CH₂)₃Si(OEt)₃]₂ (4c)

N[(CH₂)₃Si(OMe)₃]₂ (4d)

NH(CH₂)₃Si(OEt)₂(Me) (4e)

NH(CH₂)₂NH(CH₂)₃Si(OMe)₃ (4f)

NH(CH₂)₂NH(CH₂)₃Si(OEt)₃ (4g)

NH(CH₂)₂NH(CH₂)₂NH(CH₂)₃Si(OMe)₃ (4h)

NPh(CH₂)Si(OMe)₃ (4i)

NPh(CH₂)₃Si(OMe)₃ (4j)

NH(CH₂)₂NH(CH₂)₃SiMe(OMe)₂ (4k)

N(CH₂CH₂)₂N(CH₂)₃SiMe(OMe)₂ (4l)

Derartige Titanamide sind leicht aus Chlortitanaten und geeigneten Ligandenvorläufern darstellbar. Bevorzugte Ligandenvorläufer sind die Alkalimetallsalze von primären oder sekundären Aminen, insbesondere die Lithiumsalze. Dabei läuft die Reaktion nach folgendem Schema ab:

TiL¹ₙL²ₘ + mNX₂M → TiL¹ₙ(NX₂)ₘ + mML²

Dabei steht L² für ein Halid, insbesondere Cl, und M für ein Alkalimetall wie Na, K, Li oder ein Erdalkalimetall wie Mg (wobei dann M = MgX mit X = Cl, Br oder l), vorzugsweise Li. N und m sind wie oben für Formel (2) definiert. Diese Amidsalze werden in situ durch Deprotonierung der korrespondierenden primären oder sekundären Amine mit Alkalimetallen oder organometallischen Reagenzien synthetisiert. In bevorzugten Ausführungsformen ist n = 3, m = 1, L² = Cl, L¹ = OR⁴ und M = Li.

In weiteren Ausführungsformen ist die mindestens eine Titanverbindung eine Titanverbindung der Formel (5),

Ti(OR⁴)₃(R⁵) (5)

wobei jedes R⁴ unabhängig für C₁₋₈ Alkyl steht, insbesondere für Ethyl, i-Propyl oder n-Butyl; und R⁵ für C₁₋₁₀ Alkyl, Cyclopentadienyl oder Aryl steht, insbesondere für Methyl.

Derartige Titanverbindungen sind analog zu den oben beschriebenen Titanamiden leicht aus Chlortitanaten und geeigneten Ligandenvorläufern darstellbar. Bevorzugte Ligandenvorläufer sind organometallische Alkyl- Cyclopentadienyl- oder Arylverbindungen. Dabei läuft die Reaktion nach folgendem Schema ab:

TiL¹ₙL²ₘ + mR⁵M → TiL¹ₙR⁵ₘ + mML²

Dabei steht L² für ein Halid, insbesondere Cl, und M für ein Alkalimetall wie Na, K, Li oder ein Erdalkalimetall wie Mg (wobei dann M = MgX mit X = Cl, Br oder l), vorzugsweise Li. n und m sind wie oben für Formel (2) definiert. In bevorzugten Ausführungsformen ist n = 3, m = 1, L² = Cl, L¹ = OR⁴, M = Li und R⁵ ist wie oben definiert.

In bevorzugten Ausführungsformen enthält die Zusammensetzung ferner mindestens eine Verbindung c), die eine hydrolysierbare Silizium-haltige Gruppe und ein Molekulargewicht im Bereich von 100 bis 1000 g/mol aufweist. Diese dient als Vernetzungmittel und kann neben der hydrolysierbaren Silizium-haltigen Gruppe weitere funktionelle Gruppen enthalten. Bei der Verbindung kann es sich um ein Silankopplungsmittel handeln.

Ein derartiges Kopplungsmittel ist in der Lage als Klebkraftverstärker, als die physikalischen Eigenschaften beeinflussendes Mittel, als Trocknungsmittel, als Dispersionshilfsmittel oder als Füllmaterial oder ähnliches zu dienen. Insbesondere kann ein derartiges Silankopplungsmittel als Haftverstärker wirken und die Adhäsion auf verschiedenen Oberflächen, wie beispielsweise Glas, Aluminium, Edelstahl, Zink, Kupfer, Mörtel, PVC, Acrylharzen, Polyester, Polyethylen, Polypropylen und Polycarbonat erhöhen. Ein solches Silankopplungsmittel kann reaktive Silizium-haltige Gruppen umfassen, die analog zu den oben im Zusammenhang mit der Polymerkomponente a) beschriebenen Gruppen definiert sein können. Alternativ können die Gruppen auch solche der Formel (7) sein:

-(Si(R¹)₂₋ₑ(X)ₑ-O)ₖ-Si(R¹)_{3-d}X_{d} (7)

Dabei sind jedes R¹ und X jeweils unabhängig wie oben für Formel (1) definiert und e ist 0, 1 oder 2, d ist 0, 1, 2 oder 3, wobei d und e nicht beide 0 sind, und k ist 0 oder eine ganze Zahl von 1 bis 19, wobei wenn k 0 ist, d nicht 0 ist.

Die Verbindung c) kann weitere funktionelle Gruppen enthalten, einschließlich, ohne Beschränkung, primäre, sekundäre oder tertiäre Aminogruppen, Mercaptogruppen, Epoxygruppen, Carboxylgruppen, Vinylgruppen, Isocyanatgruppen, Isocyanuratgruppen, Halogene und ähnliche.

Spezielle Beispiele dieser Kopplungsmittel schließen ein, ohne darauf beschränkt zu sein, Isocyanatgruppen-haltige Silane, wie gamma-Isocyanatpropyltrimethoxysilan, gamma-Isocyanatpropyltriethoxysilan, gamma-Isocyanatpropylmethyldiethoxysilan, gamma-Isocyanatpropylmethyldimethoxysilan, (Isocyanatmethyl)trimethoxysilan, (Isocyanatmethyl)methyldimethoxysilan, (Isocyanatmethyl)triethoxysilane und (Isocyanatmethyl)diethoxymethylsilan; Aminogruppen-haltige Silane wie gamma-Aminopropyltrimethoxysilan, gamma-Aminopropyltriethoxysilan, gamma-Aminopropyltriisopropoxysilan, gamma-Aminopropylmethyldimethoxysilane, gamma-Aminopropylmethyldiethoxysilan, gamma-(2-Aminoethyl)aminopropyltrimethoxysilan, gamma-(2-Aminoethyl)aminopropylmethyldimethoxysilan, gamma-(2-Aminoethyl)aminopropyltriethoxysilan, gamma-(2-Aminoethyl)aminopropylmethyldiethoxysilane, gamma-(2-Aminoethyl)aminopropyltriisopropoxysilan, gamma-(6-Aminohexyl)aminopropyltrimethoxysilan, 3-(N-ethylamino)-2-methylpropyltrimethoxysilan, gamma-Ureidopropyltrimethoxysilan, gamma-Ureidopropyltriethoxysilan, N-Phenyl-gamma-Aminopropyltrimethoxysilan, N-Benzyl-gamma-Aminopropyltrimethoxysilan, N-Vinylbenzyl-gamma-Aminopropyltriethoxysilan, N-Cyclohexylaminomethyltriethoxysilan, N-Cyclohexylaminomethyldiethoxymethylsilan, N-Phenylaminomethyltrimethoxysilan, (2-Aminoethyl)aminomethyltrimethoxysilan und N,N'-bis[3-(trimethoxysilyl)propyl]ethylendiamin; Silane vom Ketimintyp, wie N-(1,3-dimethylbutyliden)-3-(triethoxysilyl)-1-propanamin; Mercaptogruppen-haltige Silane, wie gamma-Mercaptopropyltrimethoxysilan, gamma-Mercaptopropyltriethoxysilan, gamma-Mercaptopropylmethyldimethoxysilan, gamma-Mercaptopropylmethyldiethoxysilan, Mercaptomethyltrimethoxysilan und Mercaptomethyltriethoxysilan; Epoxygruppen-haltige Silane, wie gamma-Glycidoxypropyltrimethoxysilan, gamma-Glycidoxypropyltriethoxysilan, gamma-Glycidoxypropylmethyldimethoxysilan, beta-(3,4-Epoxycyclohexyl)ethyltrimethoxysilan und beta-(3,4-Epoxycyclohexyl)ethyltriethoxysilan; Carboxysilane, wie beta-Carboxyethyltriethoxysilan, beta-Carboxyethylphenylbis(2-methoxyethoxy)silan und N-beta-(Carboxymethyl)aminoethyl-gamma-Aminopropyltrimethoxysilan; Silane, die ungesättigte Gruppen vom Vinyl-typ enthalten, wie Vinyltrimethoxysilan, Vinyltriethoxysilan, gamma-Methacryloyloxypropylmethyldimethoxysilan, gamma-Acryloyloxypropyltriethoxysilan und Methacryloyloxymethyltrimethoxysilan; Halogen-haltige Silane, wie gamma-Chloropropyltrimethoxysilan; und Isocyanurat-Silane, wie Tris(3-trimethoxysilylpropyl)isocyanurat. Zusätzlich können teilkondensierte Produkte oder Reaktionsprodukte der vorstehend genannten Silane verwendet werden. Besonders bevorzugt sind im Rahmen der vorliegenden Erfindung Aminosilane.

Beispiele von Verbindungen c), die keine zusätzlichen funktionellen Gruppen enthalten, umfassen Tetraalkoxysilane (Tetraalkylsilikate), wie Tetramethoxysilan, Tetraethoxysilan, Ethoxytrimethoxysilan, Dimethoxydiethoxysilan, Methoxytriethoxysilan, Tetra-n-propoxysilan, Tetra-i-propoxysilan, Tetra-n-butoxysilan, Tetra-i-butoxysilan und Tetra-t-butoxysilan; Trialkoxysilane, wie Methyltrimethoxysilan, Methyltriethoxysilan, Methyltriisopropoxysilan, Methyltriphenoxysilan, Ethyltrimethoxysilan, Butyltrimethoxysilan und Phenyltrimethoxysilan; Dialkoxysilane, wie Dimethyldimethoxysilan, Diethyldimethoxysilan und Diphenyldimethoxysilan; Monoalkoxysilane, wie Trimethylmethoxysilan und Triphenylmethoxysilan; Alkylisopropenoxysilane, wie Dimethyldiisopropenoxysilan und Methyltriisopropenoxysilan; und die teilweise hydrolysierten Kondensate dieser Silane.

Ein weiterer Gegenstand der vorliegenden Erfindung ist eine Zubereitung, die die erfindungsgemäße härtbare Zusammensetzung enthält. Nach einer weiteren bevorzugten Ausführungsform der erfindungsgemäßen Zubereitung enthält diese ferner mindestens eine Verbindung ausgewählt aus der Gruppe umfassend Weichmacher, Stabilisatoren, Antioxidantien, Füllstoffe, Reaktivverdünner, Trockenmittel, Haftvermittler, UV-Stabilisatoren, rheologische Hilfsmittel und/oder Lösungsmittel. In der Zubereitung kann der oben beschriebene Titan-Katalysator oder Mischungen verschiedener Titankatalysatoren, d.h. die Titanverbindung b), in einer Menge von 0,001 bis etwa 5 Gew.-%, vorzugsweise 0,001 bis 1,5 Gew.-%, bezogen auf das Gesamtgewicht der Zubereitung eingesetzt werden.

In den hierin beschriebenen Zubereitungen kann die Menge des reaktiven Polymers a) 30 bis 90 Gew.-% bezogen auf das Gesamtgewicht der Zubereitung betragen. Die Menge an Vernetzungsmittel c) kann 2,5 bis 7 Gew.-% bezogen auf das Gesamtgewicht der Zubereitung betragen. Haftvermittler können in Mengen von 0 bis 5 Gew.-% bezogen auf das Gesamtgewicht der Zubereitung eingesetzt werden.

Die hierin beschriebenen härtbaren Zusammensetzungen und Zubereitungen können als Kleb- und Dichtstoffe verwendet werden. Die derartige Verwendung ist ebenfalls Bestandteil der Erfindung.

Es ist denkbar, dass die Viskosität des erfindungsgemäßen Kleb- oder Dichtstoffs für bestimmte Anwendungen zu hoch ist. Diese kann man dann in der Regel durch Verwendung eines Reaktivverdünners auf einfache und zweckmäßige Weise verringern oder einstellen, ohne dass es zu Entmischungserscheinungen (z.B. Weichmacherwanderung) in der ausgehärteten Masse kommt.

Vorzugsweise weist der Reaktivverdünner mindestens eine funktionelle Gruppe auf, die nach der Applikation z.B. mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme.

Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Die Viskosität des Reaktivverdünners beträgt bevorzugt weniger als 20.000 mPas, besonders bevorzugt etwa 0,1 - 6.000 mPas, ganz besonders bevorzugt 1 - 1000 mPas (Brookfield RVT, 23 °C, Spindel 7, 10 U/min).

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, wie Methyltrimethoxysilan, Methyltriethoxysilan sowie Vinyltrimethoxysilan (XL 10, Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (IO Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silanmodifizierte Polyether verwenden, die sich z.B. aus der Umsetzung von Isocyanatosilan mit Synalox Typen ableiten.

Weiterhin kann man als Reaktivverdünner Polymere einsetzen, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül eine oder mehrere Hydroxyl (OH)-Gruppen enthalten kann. Die OH-Gruppen können sowohl primär als auch sekundär sein.

Zu den eigneten aliphatischen Alkoholen zählen beispielsweise Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten.

Zur Herstellung der erfindungsgemäß bevorzugten Reaktivverdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt.

Vorzugsweise weist die im Rahmen der vorliegenden Erfindung als Reaktivverdünner vorliegende Verbindung mindestens eine Alkoxysilylgruppe auf, wobei unter den Alkoxysilylgruppen die Di- und Trialkoxysilylgruppen bevorzugt sind.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4-oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso kann man als Polyisocyanate sind drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Zur Reduzierung der Viskosität der erfindungsgemäßen Zubereitung lassen sich neben oder anstatt eines Reaktivverdünners auch Lösungsmittel und / oder Weichmacher einsetzen.

Als Lösungsmittel eignen sich aliphatische oder aromatische Kohlenwasserstoffe, halogenierte Kohlenwasserstoffe, Ketone, Ether, Ester, Esteralkohole, Ketoalkohole, Ketoether, Ketoester und Etherester.

Die erfindungsgemäße Zubereitung kann ferner hydrophile Weichmacher enthalten. Diese dienen zur Verbesserung der Feuchtigkeitsaufnahme und damit zur Verbesserung der Reaktivität bei niedrigen Temperaturen. Als Weichmacher geeignet sind beispielsweise Ester der Abietinsäure, Adipinsäureester, Azelainsäureester, Benzoesäureester, Buttersäureester, Essigsäureester, Ester höherer Fettsäuren mit etwa 8 bis etwa 44 C-Atomen, epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon.

Beispielsweise eignen sich von den Phthalsäureestern Dioctylphthalat, Dibutylphthalat, Diisoundecylphthalat oder Butylbenzylphthalat, von den Adipaten Dioctyladipat, Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ferner eignen sich als Weichmacher endgruppenverschlossene Polyethylenglykole. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt als Weichmacher sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im Wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Die erfindungsgemäße Zubereitung kann außerdem bis zu etwa 20 Gew.-% an üblichen Haftvermittlern (Tackifier) enthalten. Als Haftvermittler geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich *α*- oder *β*-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, *α*-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester.

Ferner kann die erfindungsgemäße Zubereitung weiterhin bis zu etwa 7 Gew.-%, insbesondere bis zu etwa 5 Gew.-% Antioxidantien enthalten.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen.

Eine solche Verbesserung der Lagerbarkeit lässt sich beispielsweise durch den Einsatz von Trockenmitteln erreichen. Als Trockenmittel eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Trockenmittel gegenüber in die Zubereitung eingedrungener Feuchtigkeit höher sein, als die Reaktivität der Gruppen des in der Zubereitung vorliegenden erfindungsgemäßen silylgruppentragenden Polymers

Als Trockenmittel eignen sich beispielsweise Isocyanate.

Vorteilhafterweise werden als Trockenmittel Silane eingesetzt. Beispielsweise Vinylsilane wie 3-Vinylpropyltriethoxysilan, Oximsilane wie Methyl-O,O*'*,*O*"-butan-2-on-trioximosilan oder O,O*'*,O*"*,O*"'*-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Hinsichtlich Effizienz und Kosten sind hier Vinyltrimethoxysilan und Tetraethoxysilan besonders bevorzugt

Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen silylgruppentragenden Polymers.

Schließlich können als Trockenmittel auch Alkylorthoformiate oder -orthoacetate eingesetzt werden, bsw. Methyl- oder Ethylorthoformiat, Methyl- oder Ethylorthoacetat,
Die erfindungsgemäßen Kleb- und Dichtstoffe enthalten in der Regel etwa 0 bis etwa 6 Gew.-% Trockenmittel.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel und Spreu. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 15.000, vorzugsweise 40.000 bis 80.000 mPas oder auch 50.000 bis 60.000 mPas.

Die Füllstoffe werden vorzugsweise in einer Menge von 1 bis 80 Gew.-% bezogen auf das Gesamtgewicht der Zubereitung eingesetzt.

Die Herstellung der erfindungsgemäßen Zubereitung erfolgt nach bekannten Verfahren durch inniges Vermischen der Bestandteile in geeigneten Dispergieraggregaten, z. B. einem Schnellmischer.

Ein weiterer Gegenstand der vorliegenden Erfindung betrifft die Verwendung der erfindungsgemäßen Zusammensetzung oder der erfindungsgemäßen Zubereitung als Klebstoff, Dichtmasse, Spachtelmasse und zur Herstellung von Formteilen. Ein weiteres Anwendungsgebiet der erfindungsgemäßen Zusammensetzungen ist die Verwendung als Dübel-, Loch- oder Rissspachtelmasse.

Die erfindungsgemäßen Zusammensetzungen und Zubereitungen eignen sich also zum Verkleben von Kunststoffen, Metallen, Glas, Keramik, Holz, Holzwerkstoffen, Papier, Papierwerkstoffen, Gummi und Textilien, zum Verkleben von Fußböden, Abdichten von Bauwerksteilen, Fenstern, Wand- und Bodenbelägen sowie Fugen im allgemeinen. Hierbei können die Materialien jeweils mit sich selbst oder beliebig untereinander verklebt werden.

In einem weiteren Aspekt betrifft die Erfindung auch die Titanverbindungen der Formel (6),

Ti(OR⁴)₃(NXX') (6)

wobei
jedes R⁴ unabhängig für C₁₋₈ Alkyl steht, insbesondere für Ethyl, i-Propyl oder n-Butyl;
X für Wasserstoff, C₁₋₂₀ Alkyl oder Aryl, wobei der Alkylrest optional ein oder mehrere Stickstoffatome enthalten kann, oder eine Silizium-haltige organische Gruppe der Formel -(CH₂)ₚ-Si(Alk)_{q}(OAlk)ᵣ, wobei p eine ganze Zahl von 0-9 ist, q 0, 1 oder 2 ist, r 1, 2 oder 3 ist, wobei q + r = 3, und Alk eine C₁₋₄ Alkylgruppe ist, insbesondere Methyl oder Ethyl, steht; und
X' für eine Silizium-haltige organische Gruppe der Formel -(CH₂)ₚ-Si(Alk)_{q}(OAlk)ᵣ steht, wobei p eine ganze Zahl von 1-9, insbesondere 3, ist, q 0, 1 oder 2, insbesondere 0, ist, r 1, 2 oder 3, insbesondere 3, ist, wobei q + r = 3, und Alk eine C₁₋₄ Alkylgruppe ist, insbesondere Methyl oder Ethyl.

In bevorzugten Ausführungsformen dieser Titanverbindungen der Formel (6) ist der Ligand der Formel (NX₂), ein Ligand wie er oben für die Formeln (2) und (4) definiert ist, d.h. ein Ligand, der durch Kopplung eines Aminosilans an das Titan erhältlich ist. Beispiele für solche Liganden schließen ein, ohne darauf beschränkt zu sein, bis(Trialkylsilyl)amido, wie beispielsweise bis(Trimethylsilyl)amido, Trialkoxysilanamido und bis(Trialkoxysilan)amido, insbesondere Trialkoxysilanalkylamido und bis(Trialkoxysilanalkyl)amido, wie beispielsweise 3-(triethoxysilyl)propyl-1-amido (4a), 3-(trimethoxysilyl)propyl-1-amido (4b), bis[(3-Triethoxysilyl)propyl]amido (4c), bis[(3-Trimethoxysilyl)propyl]amido (4d), 3-[diethoxy(methyl)silyl]propyl-1-amido (4e), 2-((3-(trimethoxysilyl)propyl)amino)ethyl-1-amido (4f), 2-((3-(triethoxysilyl)propyl)amino)ethyl-1-amido (4g), 9-(Trimethoxysilyl)-3,6-diazanonane-1-amido (4h), phenyl((trimethoxysilyl)methyl)amido (4i), phenyl(3-(trimethoxysilyl)propyl)amido (4j) und 2-((3-(dimethoxy(methyl)silyl)propyl)amino)ethyl-1-amido (4k).

NH(CH₂)₃Si(OMe)₃ (4a)

NH(CH₂)₃Si(OEt)₃ (4b)

N[(CH₂)₃Si(OEt)₃]₂ (4c)

N[(CH₂)₃Si(OMe)₃]₂ (4d)

NH(CH₂)₃Si(OEt)₂(Me) (4e)

NH(CH₂)₂NH(CH₂)₃Si(OMe)₃ (4f)

NH(CH₂)₂NH(CH₂)₃Si(OEt)₃ (4g)

NH(CH₂)₂NH(CH₂)₂NH(CH₂)₃Si(OMe)₃ (4h)

NPh(CH₂)Si(OMe)₃ (4i)

NPh(CH₂)₃Si(OMe)₃ (4j)

NH(CH₂)₂NH(CH₂)₃SiMe(OMe)₂ (4k)

N(CH₂CH₂)₂N(CH₂)₃SiMe(OMe)₂ (4l)

Schließlich betrifft die Erfindung auch die Verwendung dieser Titanverbindungen als Katalysator, insbesondere als Kondensationskatalysator zur Aushärtung eines Silizium-haltigen Polymers. Bei dieser Aushärtung werden die reaktiven Silizium-haltigen Gruppen unter Bildung von Siloxanbindungen vernetzt.

Die folgenden Beispiele dienen der Erläuterung der Erfindung, die Erfindung ist aber nicht darauf beschränkt.

### Beispiele

### Beispiel 1: Bis(trimethylsilyl)amido-tris(isopropoxy)titan

Das folgende Verfahren basiert auf dem in J. Chem. Soc. A, 1968, 1940-1945 offenbarten Verfahren und ist für die Synthese der hierin beschriebenen Katalysatoren entsprechend angepasst.

In einem Schlenkkolben wurden unter Argon-Atmosphäre 3 mL einer 2.5 M Lösung von n-BuLi (n-Butyllithium) in 40 mL trockenem n-Hexan verdünnt und auf -20 °C gekühlt. Zu der gekühlten Lösung wurden über 30 Minuten tropfenweise 1.29 g (8.02 mmol) Hexamethyldisilazan (HMDS) gegeben. Nach erfolgter Zugabe wurde die Mischung gerührt und 2.1 g (8.06 mmol) Tris(isopropoxy)titanchlorid tropfenweise zugegeben. Die Mischung wird langsam auf Raumtemperatur erwärmt und das resultierende Präzipitat wird abgetrennt und mit trockenem n-Hexan gewaschen. Die kombinierten organischen Extrakte wurden im Vakuum konzentriert und das ölige Rohprodukt im Vakuum destilliert, um das Produkt als eine klare, farblose Flüssigkeit zu erhalten (2.5 g, 7.68 mmol, 95% Ausbeute).

Das Produkt wurde als Katalysator in folgenden Formulierungen eingesetzt.

**Tabelle 1: Formulierung 1 (Alkoxysilikon ohne Haftvermittler)**

| **Rohstoffe** | **Gew.-Teile** |
|---|---|
| α,ω-di-dimethoxyvinyl-terminiertes Polydimethylsiloxan mit Viskosität von 80000 cST (genaue Herstellvorschrift siehe US5663269) | 70,94 |
| Polydimethylsiloxan mit Viskosität von 100 cST | 16,76 |
| Hochdisperse Kieselsäure (Aerosil R104) | 11 |
| Katalysator | 1,3 |

**Tabelle 2: Formulierung 2 (Alkoxysilikon mit Haftvermittler)**

| **Rohstoffe** | **Gew.-Teile** |
|---|---|
| α,ω-di-dimethoxyvinyl-terminiertes Polydimethylsiloxan mit Viskosität von 50000 cST (genaue Herstellvorschrift siehe US2003/0216536) | 48,3 |
| Kreide, Kalziumcarbonat | 45,2 |
| Hochdisperse Kieselsäure (Aerosil R974) | 4,4 |
| Aminopropyl-trimethoxysilan | 0,8 |
| Katalysator | 0,17 |

**Tabelle 3: Formulierung 3 (Oximsilikon mit Haftvermittler)**

| **Rohstoffe** | **Gew.-Teile** |
|---|---|
| α,ω-dihydroxy-terminiertes Polydimethylsiloxan mit Viskosität von 80000 | 59,75 |
| Mineralöl (G3H) | 24,75 |
| Methyltris(methylisobutylketoxim)silan | 1,7 |
| Methyl-tris-(methylethylketoximo)silan | 2,1 |
| Vinyltris(methylethylketoxim)silan | 0,5 |
| Hochdisperse Kieselsäure (Aerosil 150) | 10 |
| Aminopropyl-triethoxysilan | 1,15 |
| Katalysator | 0,05 |

### Beispiel 2: Methyl-tris(isopropoxy)titan

Die Herstellung des *Methyl-tris(isopropoxy)titan* basiert auf dem in J. Organomet. Chem 1974, 74, 85-90 offenbarten Verfahren.

Das Produkt wurde als Katalysator in folgenden Formulierungen eingesetzt.

**Tabelle 4: Formulierung 4 (Alkoxysilikon ohne Haftvermittler)**

| **Rohstoffe** | **Gew.-Teile** |
|---|---|
| α,ω-di-dimethoxyvinyl-terminiertes Polydimethylsiloxan mit Viskosität von 80000 cST (genaue Herstellvorschrift siehe US5663269A) | 70,94 |
| Polydimethylsiloxan mit Viskosität von 100 cST | 16,76 |
| Hochdisperse Kieselsäure (Aerosil R104) | 11 |
| Katalysator | 1,3 |

**Tabelle 5: Formulierung 5 (Alkoxysilikon mit Haftvermittler)**

| **Rohstoffe** | **Gew.-Teile** |
|---|---|
| α,ω-di-dimethoxyvinyl-terminiertes Polydimethylsiloxan mit Viskosität von 50000 cST (genaue Herstellvorschrift siehe US2003/0216536) | 49,43 |
| Kreide, Kalziumcarbonat | 45,2 |
| Hochdisperse Kieselsäure (Aerosil R974) | 4,4 |
| Aminopropyl-trimethoxysilan | 0,8 |
| Katalysator | 1,3 |

**Tabelle 6: Formulierung 6 (Oximsilikon mit Haftvermittler)**

| **Rohstoffe** | **Gew.-Teile** |
|---|---|
| α,ω-dihydroxy-terminiertes Polydimethylsiloxan mit Viskosität von 80000 | 59,75 |
| Mineralöl (G3H) | 24,75 |
| Methyltris(methylisobutylketoxim)silan | 1,7 |
| Methyl-tris-(methylethylketoximo)silan | 2,1 |
| Vinyltris(methylethylketoxim)silan | 0,5 |
| Hochdisperse Kieselsäure (Aerosil 150) | 10 |
| Aminopropyl-triethoxysilan | 1,15 |
| Katalysator | 0,05 |

### Beispiel 3: Haftungsprüfung und Mechanik

### Messung der Hautbildungszeit

Die Bestimmung der Hautbildungszeit erfolgt im Normalklima (23 +/- 2 °C, relative Luftfeuchte 50 +/-5 %). Die Temperatur des Dichtstoffes muss 23+/-2°C betragen, der Dichtstoff ist mindestens 24h im Labor vorzulagern. Der Dichtstoff wird auf ein Blatt Papier aufgebracht und mit einem Ziehspachtel zu einem Fell ausgezogen (Dicke ca. 2 mm, Breite ca. 7 cm). Stoppuhr sofort starten. In Intervallen die Oberfläche leicht mit der Fingerspitze berühren und Finger wieder wegziehen - so stark auf die Oberfläche drücken, dass ein Abdruck auf der Oberfläche bei Erreichen der Hautbildungzeit verbleibt. Die Hautbildungszeit ist erreicht, wenn keine Dichtmasse mehr an der Fingerspitze haften bleibt. Die Hautbildungszeit wird in Minuten angegeben.

### Messung der Shore A Härte

Die Durchführung erfolgt gemäß ISO 868.

### Messung der Härtungstiefe

Ein Dichtstoffstrang mit einer Höhe von 10 mm (+/- 1 mm) und einer Breite von 20 mm (+/- 2 mm) wird mit einem entsprechenden Spachtel auf ein Kunststoffkartenblatt appliziert. Nach einer Lagerung von 24 Stunden bei Normalklima (23 +/- 2 °C, relative Luftfeuchte 50 +/- 5 %), wird ein Stück aus dem Strang herausgeschnitten und die Dicke der ausgehärteten Schicht mit einer Schieblehre gemessen. Die Härtungstiefe wird in [mm / 24 h] angegeben.

### Messung der mechanischen Eigenschaften (Zugversuch)

Mit dem Zugversuch werden die Bruchkraft, Bruchdehnung und Dehnspannungswerte (E-Module) in Anlehnung an DIN 53504 ermittelt.
Abweichung zur Norm: Als Probekörper werden Schulterstäbe mit folgenden Dimensionen verwendet: Dicke: 2 +/- 0.2 mm; Breite des Stegs: 10 +/- 0,5 mm; Länge des Stegs: ca. 45 mm; Gesamtlänge: 9 cm. Die Prüfung erfolgt bei im Normklima (23 +/- 2 °C, 50 +/- 5 % rel. Luftfeuchtigkeit). Die Prüfung erfolgt nach 7 Tagen Aushärtung.
Durchführung: Von der Dichtmasse wird ein 2mm dicker Film ausgezogen. Der Film wird für 7 Tage im Normklima gelagert und dann die Schulterstäbe herausgestanzt. Für jede Bestimmung sind je drei Schulterstäbe herzustellen. Die Prüfung ist im Normklima durchzuführen. Die Prüflinge sind müssen vorher mindestens 20 Minuten an die Prüftemperatur angeglichen (d.h. gelagert) werden. Vor der Messung ist die Dicke der Probekörper an mindestens 3 Stellen bei RT mit einer Schieblehre zu messen, d.h. bei den Schulterstäben sind innerhalb der Anfangsmesslänge vorzugsweise die Enden und die Mitte zu vermessen. Bei elastischen Materialien empfiehlt es sich zusätzlich noch quer über den Steg. Der Mittelwert ist in das Messprogramm einzugeben. Die Probekörper sind so in die Zugprüfmaschine einzuspannen, so dass die Längsachse mit der mechanischen Achse der Zugprüfmaschine übereinstimmt und eine möglichst große Fläche der Stabköpfe erfasst wird, ohne dass der Steg eingeklemmt wird. Mit einer Vorschubgeschwindigkeit von 50mm/min wir der Schulterstab auf eine Vorspannung von <0,1 MPa gespannt. Dann erfolgt die Aufnahme der Kraft-Längenänderungskurve mit einer Vorschubgeschwindigkeit von 50 mm/min.
Auswertung: Folgende Werte sind der Messung zu entnehmen: Bruchkraft in [N/mm²], Bruchdehnung in [%] und E-Modul bei 100% Dehnung in [N/mm²].

Die Ergebnisse der Messungen sind den Tabellen 7 und 8 zu entnehmen.

**Tabelle 7: Formulierungen 1 bis 3 und Vergleichsformulierungen V1, V2, V2' und V3**

| Parameter | F1 | V1 | F2 | V2 | V2' | F3 | V3 |
|---|---|---|---|---|---|---|---|
| Hautbildungszeit (min) | 33 | 46 | 8 | 20 | 24 | 15 | 17 |
| Shore A 7d | 18 | 24 | 25 | 20 | 19 | 18 | 17 |
| Härtungstiefe (mm / 24 h) | 2,25 | 2,62 | 3,08 | 2,11 | 2,65 | 2,74 | 3,11 |
| E-Modul bei 100 % (N/mm²) | 0,33 | 0,50 | 0,52 | 0,36 | 0,59 | 0,32 | 0,24 |
| Bruchkraft (N/mm²) | 0,92 | 2,19 | 0,46 | 0,34 | 0,99 | 0,90 | 0,79 |
| Bruchdehnung (%) | 385 | 534 | 143 | 127 | 272 | 480 | 514 |

| | | | | | | | |
|---|---|---|---|---|---|---|---|
| F1-F3 = Formulierung 1-3; V1 = Formulierung 1 mit 1,30 Gew.-% Tetra-n-butyltitanat anstelle des erfindungsgemäß vorgesehenen Titankatalysators; V2 = Formulierung 2 mit 0,17 Gew.-% Tetra-n-butyltitanat anstelle des erfindungsgemäß vorgesehenen Titankatalysators; V2' = Formulierung 2 mit 0,17 Gew.-% Tetra-isopropyltitanat anstelle des erfindungsgemäß vorgesehenen Titankatalysators; V3 = Formulierung 3 mit 0,05 Gew.-% Dibutylzinnacetat anstelle des erfindungsgemäß vorgesehenen Titankatalysators. | | | | | | | |

**Tabelle 8: Formulierungen 4 bis 6 und Vergleichsformulierungen V4, V5, V6, V6' und V6"**

| Parameter | F4 | V4 | F5 | V5 | F6 | V6 | V6' | V6" |
|---|---|---|---|---|---|---|---|---|
| Hautbildungszeit (min) | 34 | 33 | 15 | 20 | 21 | 17 | 23 | 22 |
| Shore A 7d | 18 | 18 | 36 | 20 | 16 | 17 | 18 | 20 |
| Härtungstiefe (mm / 24 h) | 2,85 | 2,52 | 2,73 | 2,11 | 2,19 | 3,11 | 2,8 | 2,8 |
| E-Modul bei 100 % (N/mm²) | 0,36 | 0,50 | 0,73 | 0,36 | 0,22 | 0,24 | 0,3 | 0,3 |
| Bruchkraft (N/mm²) | 0,89 | 2,19 | 0,97 | 0,34 | 0,85 | 0,79 | 0,8 | 0,7 |
| Bruchdehnung (%) | 315 | 534 | 196 | 127 | 600 | 514 | 315 | 281 |

| | | | | | | | | |
|---|---|---|---|---|---|---|---|---|
| F4-F6 = Formulierung 4-6; V4 = Formulierung 4 mit 0,17 Gew.-% Tetra-n-butyltitanat anstelle des erfindungsgemäß vorgesehenen Titankatalysators; V5 = Formulierung 5 mit 0,17 Gew.-% Tetra-n-butyltitanat anstelle des erfindungsgemäß vorgesehenen Titankatalysators; V6 = Formulierung 6 mit 0,05 Gew.-% Dibutylzinnacetat anstelle des erfindungsgemäß vorgesehenen Titankatalysators. V6' = Formulierung 6 mit 0,05 Gew.-% Tetra-n-butyltitanat anstelle des erfindungsgemäß vorgesehenen Titankatalysators; V6" = Formulierung 6 mit 0,05 Gew.-% Tetra-isopropyltitanat anstelle des erfindungsgemäß vorgesehenen Titankatalysators. | | | | | | | | |

## Patentansprüche

1. Härtbare Zusammensetzung, umfassend
a) mindestens ein Polymer mit mindestens einer Silizium-haltigen Gruppe der Formel (1)
-Si(R¹)ₖ(Y)₃₋ₖ (1),
wobei
R¹ für einen Kohlenwasserstoffrest mit 1 bis 20 C-Atomen steht oder eine Triorganosiloxan-Gruppe der Formel -O-Si(R²)₃, wobei jedes R² unabhängig für einen Kohlenwasserstoffrest mit 1 bis 20 C-Atomen steht;
jedes Y unabhängig für eine Hydroxy- oder eine hydrolysierbare Gruppe stehen, insbesondere eine Oxim- oder/und Alkoxygruppe; und
k 0, 1 oder 2 ist;
b) mindestens eine Titanverbindung der Formel (2)
Ti(L)ₙ(NX₂)ₘ (2)
oder der Formel (3)
Ti(R³)(L)₃ (3),
wobei
jedes X unabhängig für ein Wasserstoffatom, einen Kohlenwasserstoffrest mit 1 bis 20 C-Atomen, der optional ein oder mehrere Heteroatome, insbesondere Stickstoffatome enthalten kann, oder eine Silizium-haltige organische Gruppe steht oder zwei X gemeinsam mit dem Stickstoffatom, an welches sie gebunden sind, einen heterozyklischen Ring bilden;
jedes L unabhängig für eine hydrolysierbare Sauerstoff- oder Stickstoff-haltige organische Gruppe steht, insbesondere eine Alkoxygruppe;
R³ für einen Kohlenwasserstoffrest mit 1 bis 20 C-Atomen steht; und
m 1, 2, 3 oder 4 und n 0, 1, 2 oder 3 sind, wobei m + n = 4; und
c) optional mindestens eine Verbindung, die eine hydrolysierbare Silizium-haltige Gruppe und ein Molekulargewicht im Bereich von 100 bis 1000 g/mol aufweist, insbesondere ein Aminosilan.

2. Härtbare Zusammensetzung nach Anspruch 1, **dadurch gekennzeichnet, dass** das Polymer a) ein Polymergerüst aufweist, das ausgewählt ist aus Alkydharzen, (Meth)Acrylaten und (Meth)Acrylamiden sowie deren Salzen, Phenolharzen, Polyalkylenen, Polyamiden, Polycarbonaten, Polyolen, Polyethern, Polyestern, Polyurethanen, Vinylpolymeren, Siloxanen, sowie Copolymeren bestehend aus mindestens zwei der vorgenannten Polymerklassen.

3. Härtbare Zusammensetzung nach Anspruch 1 oder 2, **dadurch gekennzeichnet, dass** die mindestens eine Titanverbindung eine Titanverbindung der Formel (4) ist,
Ti(OR⁴)₃(NX₂) (4)
wobei
jedes R⁴ unabhängig für C₁₋₈ Alkyl steht, insbesondere für Ethyl, i-Propyl oder n-Butyl;
jedes X unabhängig für Wasserstoff, C₁₋₂₀ Alkyl oder C₆₋₂₀ Aryl, wobei der Alkylrest optional ein oder mehrere Stickstoffatome enthalten kann, oder eine Silizium-haltige organische Gruppe der Formel -(CH₂)ₚ-Si(Alk)_{q}(OAlk)ᵣ, wobei p eine ganze Zahl von 0-9 ist, q und r jeweils 0, 1, 2 oder 3 sind, wobei q + r = 3, und Alk eine C₁₋₄ Alkylgruppe ist, insbesondere Methyl oder Ethyl, steht.

4. Härtbare Zusammensetzung nach Anspruch 3, **dadurch gekennzeichnet, dass** in der Titanverbindung der Formel (4) der Ligand der Formel (NX₂) ausgewählt wird aus Diethylamido, bis(Trimethylsilyl)amido, 3-(triethoxysilyl)propyl-1-amido (4a), 3-(trimethoxysilyl)propyl-1-amido (4b), bis[(3-Triethoxysilyl)propyl]amido (4c), bis[(3-Trimethoxysilyl)propyl]amido (4d), 3-[diethoxy(methyl)silyl]propyl-1-amido (4e), 2-((3-(trimethoxysilyl)propyl)amino)ethyl-1-amido (4f), 2-((3-(triethoxysilyl)propyl)amino)ethyl-1-amido (4g), 9-(Trimethoxysilyl)-3,6-diazanonane-1-amido (4h), phenyl((trimethoxysilyl)methyl)amido (4i), phenyl(3-(trimethoxysilyl)propyl)amido (4j) und 2-((3-(dimethoxy(methyl)silyl)propyl)amino)ethyl-1-amido (4k)
NH(CH₂)₃Si(OMe)₃ (4a)
NH(CH₂)₃Si(OEt)₃ (4b)
N[(CH₂)₃Si(OEt)₃]₂ (4c)
N[(CH₂)₃Si(OMe)₃]₂ (4d)
NH(CH₂)₃Si(OEt)₂(Me) (4e)
NH(CH₂)₂NH(CH₂)₃Si(OMe)₃ (4f)
NH(CH₂)₂NH(CH₂)₃Si(OEt)₃ (4g)
NH(CH₂)₂NH(CH₂)₂NH(CH₂)₃Si(OMe)₃ (4h)
NPh(CH₂)Si(OMe)₃ (4i)
NPh(CH₂)₃Si(OMe)₃ (4j)
NH(CH₂)₂NH(CH₂)₃SiMe(OMe)₂ (4k)

5. Härtbare Zusammensetzung nach Anspruch 1 oder 2, **dadurch gekennzeichnet, dass** die mindestens eine Titanverbindung eine Titanverbindung der Formel (5) ist,
Ti(OR⁴)₃(R⁵) (5)
wobei
jedes R⁴ unabhängig für C₁₋₈ Alkyl steht, insbesondere für Ethyl, i-Propyl oder n-Butyl;
R⁵ für C₁₋₁₀ Alkyl, Cyclopentadienyl oder Aryl steht, insbesondere für Methyl.

6. Härtbare Zusammensetzung nach mindestens einem der Ansprüche 1 bis 5, **dadurch gekennzeichnet, dass** die Zusammensetzung als Verbindung c) ein Aminosilan enthält, insbesondere ausgewählt aus der Gruppe bestehend aus bis(Trimethylsilyl)amin, Aminopropyltriethoxysilan, Aminopropyltrimethoxysilan, bis[(3-Triethoxysilyl)propyl]amin, bis[(3-trimethoxysilyl)propyl]amin, Aminopropylmethyldiethoxysilan, Aminoethylaminopropyltrimethoxysilan, Aminoethylaminopropyltriethoxysilan, 3-[2-(2-Aminoethylamino)-ethylamino]-propyltrimethoxysilan, Phenylaminomethyltrimethoxysilan, Aminoethylaminopropylmethyldimethoxysilan, 3-(N-Phenylamino)propyltrimethoxysilan, 3-Piperazinylpropylmethyldimethoxysilan, 3-(N,N-Dimethylaminopropyl)-Aminopropylmethyldimethoxysilan sowie Kombinationen von zwei oder mehr der vorgenannten Verbindungen.

7. Zubereitung, enthaltend eine härtbare Zusammensetzung nach mindestens einem der Ansprüche 1 bis 6.

8. Zubereitung nach Anspruch 7, **dadurch gekennzeichnet, dass** die Zubereitung ferner mindestens eine Verbindung ausgewählt aus der Gruppe umfassend Weichmacher, Stabilisatoren, Antioxidantien, Füllstoffe, Reaktivverdünner, Trockenmittel, Haftvermittler, UV-Stabilisatoren, rheologische Hilfsmittel und Lösungsmittel enthält.

9. Verwendung einer Zusammensetzung nach einem der Ansprüche 1 bis 6 oder einer Zubereitung nach einem der Ansprüche 7 bis 8 als Kleb- oder Dichtstoff.

10. Titanverbindung der Formel (6),
Ti(OR⁴)₃(NXX') (6)
wobei
jedes R⁴ unabhängig für C₁₋₈ Alkyl steht, insbesondere für Ethyl, i-Propyl oder n-Butyl;
X für Wasserstoff, C₁₋₂₀ Alkyl oder Aryl, wobei der Alkylrest optional ein oder mehrere Stickstoffatome enthalten kann, oder eine Silizium-haltige organische Gruppe der Formel-(CH₂)ₚ-Si(Alk)_{q}(OAlk)ᵣ, wobei p eine ganze Zahl von 0-9 ist, q 0, 1 oder 2 ist, r 1, 2 oder 3 ist, wobei q + r = 3, und Alk eine C₁₋₄ Alkylgruppe ist, insbesondere Methyl oder Ethyl, steht; und
X' für eine Silizium-haltige organische Gruppe der Formel -(CH₂)ₚ-Si(Alk)_{q}(OAlk)ᵣ steht, wobei p eine ganze Zahl von 1-9, insbesondere 3, ist, q 0, 1 oder 2, insbesondere 0, ist, r 1, 2 oder 3, insbesondere 3, ist, wobei q + r = 3, und Alk eine C₁₋₄ Alkylgruppe ist, insbesondere Methyl oder Ethyl.

11. Verwendung der Titanverbindung nach Anspruch 10 als Katalysator, insbesondere zur Aushärtung eines Silizium-haltigen Polymers durch die Bildung von Siloxanbindungen.

## Claims

1. A curable composition, comprising
a) at least one polymer comprising at least one silicon-containing group of formula (1)
-Si(R¹)ₖ(Y)₃₋ₖ (1)
where
R¹ represents a hydrocarbon residue having 1 to 20 C atoms or a triorganosiloxane group of formula -O-Si(R²)₃, where each R² independently represents a hydrocarbon residue having 1 to 20 C atoms;
each Y independently represents a hydroxy or hydrolyzable group, in particular an oxime and/or alkoxy group; and
k is 0, 1 or 2;
b) at least one titanium compound of formula (2)
Ti(L)ₙ(NX₂)ₘ (2)
or of formula (3)
Ti(R³)(L)₃ (3),
where
each X independently represents a hydrogen atom, a hydrocarbon residue having 1 to 20 C atoms which can optionally contain one or more heteroatoms, in particular nitrogen atoms, or represents a silicon-containing organic group, or two X together with the nitrogen atom to which they are bonded form a heterocyclic ring;
each L independently represents a hydrolyzable oxygen or nitrogen-containing organic group, in particular an alkoxy group;
R³ represents a hydrocarbon residue having 1 to 20 carbon atoms; and
m is 1, 2, 3 or 4 and n is 0, 1, 2 or 3, where m + n = 4; and
c) optionally at least one compound that comprises a hydrolyzable silicon-containing group and a molecular weight in the range of from 100 to 1000 g/mol, in particular an aminosilane.

2. The curable composition according to claim 1, **characterized in that** the polymer
a) comprises a polymer backbone selected from alkyd resins, (meth)acrylates and (meth)acrylamides and the salts thereof, phenol resins, polyalkylenes, polyamides, polycarbonates, polyols, polyethers, polyesters, polyurethanes, vinyl polymers and siloxanes, and copolymers consisting of at least two of the above-mentioned polymer classes.

3. The curable composition according to claim 1 or 2, **characterized in that** the at least one titanium compound is a titanium compound of formula (4),
Ti(OR⁴)₃(NX₂) (4)
where
each R⁴ independently represents C₁₋₈ alkyl, in particular ethyl, i-propyl or n-butyl;
each X independently represents hydrogen, C₁₋₂₀ alkyl or C₆₋₂₀aryl, it being possible for the alkyl residue to optionally contain one or more nitrogen atoms, or a silicon-containing organic group of formula -(CH₂)ₚ-Si(Alk)_{q}(OAlk)ᵣ, where p is an integer of from 0-9, q and r are each 0, 1, 2 or 3, where q + r = 3, and Alk is a C₁₋₄ alkyl group, in particular methyl or ethyl.

4. The curable composition according to claim 3, **characterized in that**, in the titanium compound of formula (4), the ligand of formula (NX₂) is selected from diethylamido, bis(trimethylsilyl)amido, 3-(triethoxysilyl)propyl-1-amido (4a), 3-(trimethoxysilyl)propyl-1-amido (4b), bis[(3-triethoxysilyl)propyl]amido (4c), bis[(3-trimethoxysilyl)propyl]amido (4d), 3-[diethoxy(methyl)silyl]propyl-1-amido (4e), 2-((3-(trimethoxysilyl)propyl)amino)ethyl-1-amido (4f), 2-((3-(triethoxysilyl)propyl)amino)ethyl-1-amido (4g), 9-(trimethoxysilyl)-3,6-diazanonane-1-amido (4h), phenyl((trimethoxysilyl)methyl)amido (4i), phenyl(3-(trimethoxysilyl)propyl)amido (4j) and 2-((3-(dimethoxy(methyl)silyl)propyl)amino)ethyl-1-amido (4k)
NH(CH₂)₃Si(OMe)₃ (4a)
NH(CH₂)₃Si(OEt)₃ (4b)
N[(CH₂)₃Si(OEt)₃]₂ (4c)
N[(CH₂)₃Si(OMe)₃]₂ (4d)
NH(CH₂)₃Si(OEt)₂(Me) (4e)
NH(CH₂)₂NH(CH₂)₃Si(OMe)₃ (4f)
NH(CH₂)₂NH(CH₂)₃Si(OEt)₃ (4g)
NH(CH₂)₂NH(CH₂)₂NH(CH₂)₃Si(OMe)₃ (4h)
NPh(CH₂)Si(OMe)₃ (4i)
NPh(CH₂)₃Si(OMe)₃ (4j)
NH(CH₂)₂NH(CH₂)₃SiMe(OMe)₂ (4k)

5. The curable composition according to claim 1 or 2, **characterized in that** the at least one titanium compound is a titanium compound of formula (5),
Ti(OR⁴)₃(R⁵) (5)
where
each R⁴ independently represents C₁₋₈ alkyl, in particular ethyl, i-propyl or n-butyl;
R⁵ represents C₁₋₁₀ alkyl, cyclopentadienyl or aryl, in particular methyl.

6. The curable composition according to at least one of claims 1 to 5, **characterized in that** the composition contains an aminosilane as compound c), in particular selected from the group consisting of bis(trimethylsilyl)amine, aminopropyltriethoxysilane, aminopropyltrimethoxysilane, bis[(3-triethoxysilyl)propyl]amine, bis[(3-trimethoxysilyl)propyl]amine, aminopropylmethyldiethoxysilane, aminoethylaminopropyltrimethoxysilane, aminoethylaminopropyltriethoxysilane, 3-[2-(2-aminoethylamino)-ethylamino]-propyltrimethoxysilane, phenylaminomethyltrimethoxysilane, aminoethylaminopropylmethyldimethoxysilane, 3-(N-phenylamino)propyltrimethoxysilane, 3-piperazinylpropylmethyldimethoxysilane, 3-(N,N-dimethylaminopropyl)-aminopropylmethyldimethoxysilane and combinations of two or more of the above-mentioned compounds.

7. A preparation containing a curable composition according to at least one of claims 1 to 6.

8. The preparation according to claim 7, **characterized in that** the preparation further contains at least one compound selected from the group comprising plasticizers, stabilizers, antioxidants, fillers, reactive diluents, desiccants, adhesion promoters, UV stabilizers, rheological auxiliaries and solvents.

9. The use of a composition according to one of claims 1 to 6 or a preparation according to one of claims 7 to 8 as an adhesive or sealant.

10. A titanium compound of formula (6),
Ti(OR⁴)₃(NXX') (6)
where
each R⁴ independently represents C₁₋₈ alkyl, in particular ethyl, i-propyl or n-butyl;
X represents hydrogen, C₁₋₂₀ alkyl or aryl, it being possible for the alkyl residue to optionally contain one or more nitrogen atoms, or a silicon-containing organic group of formula - (CH₂)ₚ-Si(Alk)_{q}(OAlk)ᵣ, where p is an integer of from 0-9, q is 0, 1 or 2, r is 1, 2 or 3, where q + r = 3, and Alk is a C₁₋₄ alkyl group, in particular methyl or ethyl; and
X' represents a silicon-containing organic group of formula -(CH₂)ₚ-Si(Alk)_{q}(OAlk)ᵣ, where p is an integer of from 1-9, in particular 3, q is 0, 1 or 2, in particular 0, r is 1, 2 or 3, in particular 3, where q + r = 3, and Alk is a C₁₋₄ alkyl group, in particular methyl or ethyl.

11. The use of the titanium compound according to claim 10 as a catalyst, in particular for curing a silicon-containing polymer by forming siloxane bonds.

## Revendications

1. Composition durcissable comprenant
a) au moins un polymère comportant au moins un groupe contenant du silicium de la formule (1)
-Si(R¹)ₖ(Y)₃₋ₖ (1)
dans laquelle
R¹ représente un radical hydrocarboné comportant 1 à 20 atomes de carbone ou un groupe triorganosiloxane de la formule -O-Si(R²)₃ dans laquelle chaque R² est indépendamment un radical hydrocarboné comportant 1 à 20 atomes de carbone ;
chaque Y représente indépendamment un groupe hydroxyle ou un groupe hydrolysable, en particulier un groupe oxime ou/et alcoxyle ; et
k est 0, 1 ou 2;
b) au moins un composé du titane de la formule (2)
Ti(L)ₙ(NX2)ₘ (2)
ou de la formule (3)
Ti(R³)(L)₃ (3),
dans laquelle
chaque X représente indépendamment un atome d'hydrogène, un radical hydrocarboné comportant 1 à 20 atomes de carbone, qui peut contenir éventuellement au moins un hétéroatomes, en particulier des atomes d'azote, ou un groupe organique contenant du silicium ou deux X forment conjointement avec l'atome d'azote, auquel ils sont fixés, un noyau hétérocyclique ;
chaque L représente indépendamment un groupe organique hydrolysable contenant de l'oxygène ou de l'azote, en particulier un groupe alcoxyle ;
R³ représente un radical hydrocarboné comportant 1 à 20 atomes de carbone ; et
m est égal à 1, 2, 3 ou 4 et n est égal à 0, 1, 2 ou 3, avec m + n = 4 ; et
c) éventuellement au moins un composé comportant un groupe hydrolysable contenant du silicium et ayant un poids moléculaire dans la gamme allant de 100 à 1000 g/mol, en particulier un aminosilane.

2. Composition durcissable selon la revendication 1 **caractérisée en ce que** le polymère a) comporte un squelette polymère choisi parmi les résines alkydes, les (méth)acrylates et les (méth)acrylamides et leurs sels, les résines phénoliques, les polyalkylènes, les polyamides, les polycarbonates, les polyols, les polyéthers, les polyesters, les polyuréthanes, les polymères vinyliques, les siloxanes, ainsi que les copolymères constitués d'au moins deux des classes de polymères susmentionnées.

3. Composition durcissable selon la revendication 1 ou 2, **caractérisée en ce que** l'au moins un composé du titane est un composé du titane de la formule (4),
Ti(OR⁴)₃(NX₂) (4)
dans laquelle
chaque R⁴ représente indépendamment un groupe alkyle en C₁ à C₈, en particulier l'éthyle, le i-propyle ou le n-butyle ;
chaque X est indépendamment un atome d'hydrogène, un groupe alkyle en C₁ à C₂₀ ou un aryle en C₆ à C₂₀, le radical alkyle pouvant contenir éventuellement au moins un atome d'azote, ou un groupe organique contenant du silicium de la formule -(CH₂)ₚ-Si(Alk)_{q}(OAlk)ᵣ, dans laquelle p est un nombre entier de 0 à 9, q et r sont chacun 0, 1, 2 ou 3, avec q + r = 3, et Alk est un groupe alkyle en C₁ à C₄, en particulier le méthyle ou l'éthyle.

4. Composition durcissable selon la revendication 3, **caractérisée en ce que**, dans le composé du titane de la formule (4), le ligand de la formule (NX₂) est choisi parmi diéthylamido, bis(triméthylsilyl)amido, 3-(triéthoxysilyl)propyl-1-amido (4a), 3-(triméthoxysilyl)propyl-1-amido (4b), bis[(3-triéthoxysilyl)propyl]amido (4c), bis[(3-triméthoxysilyl)propyl]amido (4d), 3-[diéthoxy(méthyle)silyl]propyl-1-amido (4e), 2-((3-(triméthoxysilyl)propyl)amino)éthyl-1-amido (4f), 2-((3-(triéthoxysilyl)propyl)amino)éthyl-1-amido (4g), 9-(triméthoxysilyl)-3,6-diazanonane-1-amido (4h), phényle((triméthoxysilyl)méthyl)amido (4i), phényle(3-(triméthoxysilyl)propyl)amido (4j) et 2-((3-(diméthoxy(méthyl)silyl)propyl)amino)éthyl-1-amido (4k)
NH(CH₂)₃Si(OMe)₃ (4a)
NH(CH₂)₃Si(OEt)₃ (4b)
N[(CH₂)₃Si(OEt)₃]₂ (4c)
N[(CH₂)₃Si(OMe)₃]₂ (4d)
NH(CH₂)₃Si(OEt)₂(Me) (4e)
NH(CH₂)₂NH(CH₂)₃Si(OMe)₃ (4f)
NH(CH₂)₂NH(CH₂)₃Si(OEt)₃ (4g)
NH(CH₂)₂NH(CH₂)₂NH(CH₂)₃Si(OMe)₃ (4h)
NPh(CH₂)Si(OMe)₃ (4i)
NPh(CH₂)₃Si(OMe)₃ (4j)
NH(CH₂)₂NH(CH₂)₃SiMe(OMe)₂ (4k)

5. Composition durcissable selon la revendication 1 ou 2, **caractérisée en ce que** l'au moins un composé du titane est un composé du titane de la formule (5),
Ti(OR⁴)₃(R⁵) (5)
dans laquelle
chaque R⁴ représente indépendamment un groupe alkyle en C₁ à C₈, en particulier l'éthyle, le i-propyle ou le n-butyle ;
R⁵ est un groupe alkyle en C₁ à C₁₀, un cyclopentadiényle ou un aryle, en particulier le méthyle.

6. Composition durcissable selon l'une des revendications 1 à 5, **caractérisé en ce que** la composition contient comme composé c) un aminosilane, en particulier choisi dans le groupe comprenant le bis{triméthylsilyl)amine, l'aminopropyltriéthoxysilane, l'aminopropyltriméthoxysilane, le bis[(3-triéthoxysilyl)propyl]amine, le bis[(3-triméthoxysilyl)propyl]amine, l'aminopropylméthyldiéthoxysilane, l'aminoéthylaminopropyltriméthoxysilane, l'aminoéthylaminopropyltriéthoxysilane, le 3-[2-(2-aminoéthylamino)éthylamino]-propyltriméthoxysilane, le phénylaminométhyltriméthoxysilane, le aminoethylaminopropylmethyldimethoxysilane, le 3-(N-phénylamino)propyltriméthoxysilane, le 3-piperazinylpropylmethyldimethoxysilane, le 3-(N,N-diméthylaminopropyl)aminopropylméthyldiméthoxysilane, et des combinaisons d'au moins deux des composés susmentionnés.

7. Préparation comprenant une composition durcissable selon l'une au moins des revendications 1 à 6.

8. Préparation selon la revendication 7, **caractérisé en ce que** la préparation comprend en outre au moins un composé choisi dans le groupe comprenant les plastifiants, les stabilisants, les antioxydants, les charges, les diluants réactifs, les agents de séchage, les promoteurs d'adhérence, les stabilisants d'UV, les adjuvants rhéologiques, et les solvants.

9. Utilisation d'une composition selon l'une des revendications 1 à 6 ou d'une préparation selon l'une des revendications 7 à 8 comme adhésif ou agent d'étanchéité.

10. Composé du titane de la formule (6),
Ti(OR⁴)₃(NXX') (6)
dans laquelle
chaque R⁴ est indépendamment un alkyle en C₁ à C₈, notamment l'éthyle, le i-propyle ou le n-butyle ;
X est un atome d'hydrogène, un alkyle en C₁ à C₂₀ ou un aryle, le radical alkyle pouvant éventuellement contenir au moins un atome d'azote, ou un groupe organique contenant du silicium de la formule -(CH₂)ₚ-Si(Alk)_{q}(OAlk)ᵣ, dans laquelle p est un nombre entier de 0 à 9, q est 0, 1 ou 2, r est égal à 1, 2 ou 3, avec q + r = 3, et Alk est un groupe alkyle en C₁ à C₄, en particulier le méthyle ou l'éthyle ; et X' est un groupe organique contenant du silicium de la formule-(CH₂)ₚ-Si(Alk)_{q}(OAlk)ᵣ, dans laquelle p est un nombre entier de 1 à 9, en particulier 3, q est 0, 1 ou 2, en particulier 0, r est 1, 2 ou 3, en particulier 3, avec q + r = 3, et Alk est un groupe alkyle en C₁ à C₄, en particulier le méthyle ou l'éthyle.

11. Utilisation du composé du titane selon la revendication 10 comme catalyseur, en particulier pour durcir un polymère contenant du silicium par la formation de liaisons siloxane.
